# EUROPEAN PATENT APPLICATION

(11) **EP 2 544 123 A2**
(43) Date of publication of application: **09.01.2013**
(21) Application number: 12175277.8
(22) Date of filing: 06.07.2012
(51) Int. Cl.: G06K 7/10

(54) **RFID antenna system and method for controlling the same**

(30) Priority: 08.07.2011 KR 20110067788
(71) Applicant: LSIS Co., Ltd., Dongan-gu, Anyang-si Gyeonggi-do 431-080 (KR)
(72) Inventor: Hong, Jin Kuk, 445-723 Gyeonggi-do (KR); Jeon, Hyung Jun, 445-829 Gyeonggi-do (KR)
(74) Representative: HOFFMANN EITLE

(57) **Abstract**

The present disclosure relates to an antenna system, and more particularly, to an RFID antenna system capable of improving a tag recognition rate of a shelf antenna system by generating energy of electromagnetic waves on a shelf, and a method for controlling the same.

An antenna system according to an embodiment includes a first antenna (120)including at least one antenna configured to operate in response to a first control signal, a second antenna (130) configured to operate in response to a second control signal and receive information from an RFID tag, and a reader unit (110) configured to generate the first or second control signal and obtain the RFID tag information received through the second antenna (130).

## Description

### CROSS-REFERENCE TO RELATED APPLICATIONS

The present application claims priority under 35 U.S.C. 119 and 35 U.S.C. 365 to Korean Patent Application No. 10-2011-0067788(July 08, 2011), which is hereby incorporated by reference in its entirety.

### BACKGROUND

The present disclosure relates to an antenna system, and more particularly, to a radio frequency identification (RFID) antenna system capable of improving a tag recognition rate of a shelf antenna system by generating energy of electromagnetic waves on a shelf, and a method for controlling the same.

In order to manage items, technology of barcode recognition or RFID communication is typically used.

According to the management method using the barcode recognition technology, items are managed by using barcodes attached thereto. However, since the barcodes assigned to respective items should be found and recognized, the management method using the barcode recognition technology is limited in speed and accuracy of management.

Recently, the management method using the RFID communication technology has been used for efficient management of items. According to the RFID communication technology, information is transmitted/received to/from an electronic tag attached to an item by using a radio frequency.

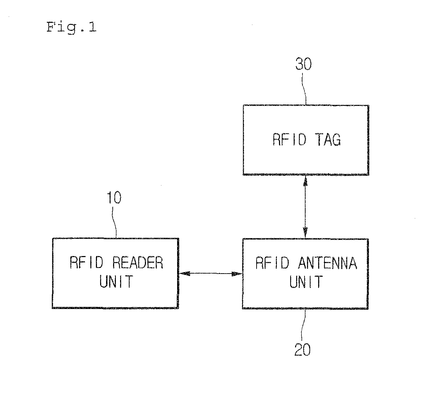

Fig. 1 is a block diagram illustrating an antenna system according to the related art.

Referring to Fig. 1, the antenna system according to the related art includes an RFID reader unit 10, an RFID antenna unit 20, and an RFID tag 30.

The RFID reader unit 10 includes the RFID antenna unit 20 internally or externally installed. The RFID antenna unit 20 radiates an active signal to thereby form an RF field as an electromagnetic field.

When the RFID tag 30 enters the RF field, the RFID tag 30 receives the active signal radiated from the antenna unit 20 of the RFID reader unit 10. By using the received active signal, information stored in the RFID tag 30 is transmitted to the RFID antenna unit 20. Thereafter, the RFID reader unit 10 receives the information transmitted from the RFID tag 30, and analyzes the information to acquire characteristic information on an item to which the RFID tag 30 is attached.

However, according to the above-described antenna system, the RFID antenna unit 20 should radiate the active signal to the RFID tag 30 so that the RFID tag 30 responds.

That is, according to the antenna system of the related art, the RFID reader unit 10 directly transmits a command to the RFID antenna unit 20 to wake up the RFID tag 30, and then communication is performed. Accordingly, initial communication time becomes longer, and recognition speed becomes slower.

### SUMMARY

Embodiments provide a shelf antenna system with a novel structure.

Embodiments also provide a shelf antenna system capable of improving a tag recognition rate by applying a showering function.

In one embodiment, an antenna system includes a first antenna includes at least one antenna configured to operate in response to a first control signal, a second antenna configured to operate in response to a second control signal and receive information from a radio frequency identification (RFID) tag, and a reader unit configured to generate the first or second control signal and obtain the RFID tag information received through the second antenna.

The antenna system may further include, if the first antenna is provided in plurality, a switching unit for switching between operation states of the plurality of first antennas.

The first control signal may be a wake-up signal of the RFID tag, and the second control signal may be for reading the RFID tag information.

The RFID tag may include at least one capacitor configured to perform charging and discharging operations for transmitting the RFID tag information.

The first control signal may be for charging a capacitor included in the RFID tag.

The antenna system may further include a shelf case, wherein the first antenna may be installed on a first side of the shelf case and may be operated at a first time point, and the second antenna may be installed on a second side of the shelf case and may be operated at a second time point.

The first side may include at least one of a rear side, a left side, and a right side of the shelf case, and the second side may be a bottom side of the shelf case.

The first time point may be repeated at a particular interval of time, and the second time point may be a point of time when the RFID tag approaches.

The first antenna may generate a signal for waking up an RFID tag or a signal for charging a capacitor included in the RFID tag.

In another embodiment, a method for controlling an antenna system includes generating a first control signal via a first antenna at a first time point, waking up an RFID tag according to the first control signal, and obtaining information from the woken-up RFID tag via a second antenna at a second time point.

The first time point may be repeated at a particular interval of time, and the second time point may be a point of time when the RFID tag is woken up by the first control signal.

The first antenna may be provided in plurality, and electromagnetic waves may be generated via the plurality of first antennas according to a showering operation.

The plurality of first antennas may be selectively operated according to an operation of the switching unit.

The details of one or more embodiments are set forth in the accompanying drawings and the description below. Other features will be apparent from the description and drawings, and from the claims.

### BRIEF DESCRIPTION OF THE DRAWINGS

Fig. 1 is a block diagram illustrating an antenna system according to the related art.

Fig. 2 is a block diagram illustrating a shelf antenna system according to an embodiment.

Fig. 3 is a block diagram illustrating an RFID reader unit according to an embodiment.

Fig. 4 is a block diagram illustrating a shelf antenna system according to another embodiment.

Fig. 5 is a diagram illustrating an example of application of a shelf antenna system according to an embodiment.

### DETAILED DESCRIPTION OF THE EMBODIMENTS

Reference will now be made in detail to the embodiments of the present disclosure, examples of which are illustrated in the accompanying drawings.

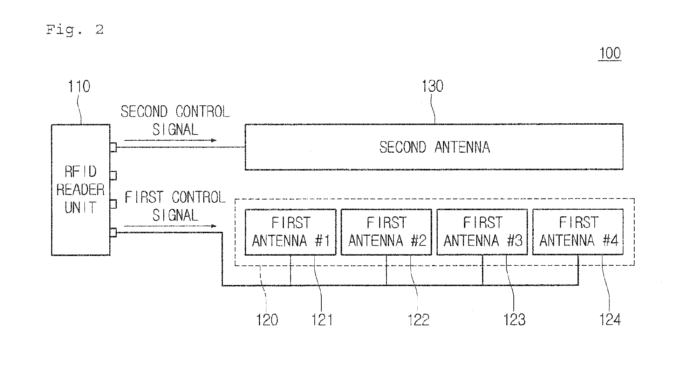

Fig. 2 is a block diagram illustrating a shelf antenna system according to an embodiment.

Referring to Fig. 2, the shelf antenna system includes an RFID reader unit 110, a first antenna 120, and a second antenna 130.

The first antenna 120 may be provided in plurality (121 to 124).

The shelf antenna system may obtain identification information of an RFID tag-attached item entering a shelf, and may manage the obtained identification information or may transmit the obtained identification information to an additional server.

The RFID reader unit 110 controls operations of the first antenna 120 and the second antenna 130.

In detail, the RFID reader unit 110 generates a first control signal to operate the first antenna 120, or generates a second control signal to operate the second antenna 130.

Herein, the first control signal is a wake-up signal for waking up an RFID tag of an item which comes near the shelf antenna system. The second control signal is a reading signal for reading identification information of the item which is stored in the RFID tag.

The RFID reader unit 110 may generate the first control signal to operate the first antenna 120. Therefore, the RFID tag coming near the shelf may be woken up by an operation of the first antenna 120.

Further, the RFID reader unit 110 may generate the second control signal to operate the second antenna 130 so that the item information is obtained from the RFID tag by an operation of the second antenna 130.

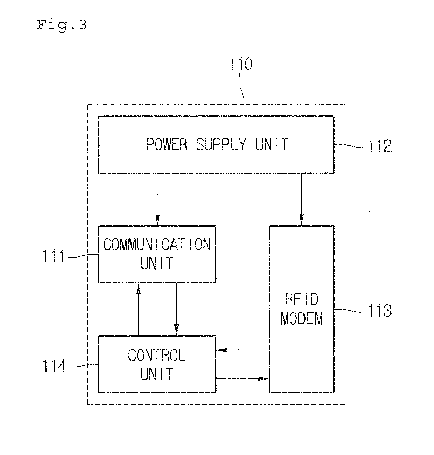

Fig. 3 is a block diagram illustrating the RFID reader unit 110.

Referring to Fig. 3, the RFID reader unit 110 includes a communication unit 111, a power supply unit 112, an RFID modem 113, and a control unit 114.

The communication unit 111 transmits item information obtained by data communication with an additional computer (not illustrated) to the server, or receives various signals transmitted from the server. An operation initiating signal may be included in the received various signals.

The communication unit 111 may perform data communication with the computer according to a USB communication protocol.

The power supply unit 112 transmits power supplied via the communication unit 111 to the RFID modem 113 and the control unit 114. That is, the RFID reader unit 110 may be connected to the additional computer. The computer may supply driving power to the RFID reader unit 110 via a USB interface.

The RFID modem 113 may transmit the control signals to the first antenna 120 and the second antenna 130, or may obtain the item information transmitted from the second antenna 130.

The control unit 114 controls an overall operation of the RFID reader unit 110.

That is, the control unit 114 generates the first control signal so that the first antenna 120 is operated.

Herein, the control unit 114 may generate the first control signal at a first time point to control the first antenna 120. That is, in the case where a certain period is 10 seconds, the first control signal is generated every 10 seconds, and accordingly the first antenna 120 is operated at an interval of 10 seconds.

The first time point may be continuously generated instead of being periodically generated. Therefore, the first antenna 120 may be continuously operated.

The control unit 114 may generate the second control signal so that the second antenna 130 is operated.

The control unit 114 may generate the second control signal at a second time point to control the second antenna 130. The second time point may be defined as a time point where the RFID tag woken up by the first antenna 120 is detected.

The first antenna 120 is operated according to the first control signal generated by the RFID reader unit 110. Therefore, the first antenna 120 performs an operation for waking up the RFID tag approaching the shelf.

That is, the first antenna 120 may be installed on an approach path through which the RFID tag-attached item comes. Accordingly, the first antenna 120 performs a showering operation for radiating electromagnetic waves to the approach path. Therefore, the RFID tag attached to the item may be woken up by the electromagnetic waves.

The second antenna 130 is operated according to the second control signal generated by the RFID reader unit 110, and accordingly obtains the item information from the RFID tag approaching the shelf.

When the item information is obtained from the RFID tag by the second antenna 130, the RFID tag is already woken up by the first antenna 120. Therefore, the second antenna 130 obtains the item information from the RFID tag in a short time.

That is, according to the embodiment, the RFID tag approaching the shelf is previously woken up by using the showering function. When the approaching of the woken-up RFID tag is detected, the item information may be obtained from the RFID tag. Therefore, the time taken for waking up the RFID tag is shortened, thereby improving a tag recognition rate.

The first antenna 120 may be continuously operated even when there is no RFID tag-attached item approaching the shelf.

In this case, electric power may be unnecessarily consumed. Therefore, according to another embodiment, only a particular antenna among the plurality of antennas of the first antenna 120 may be selectively operated.

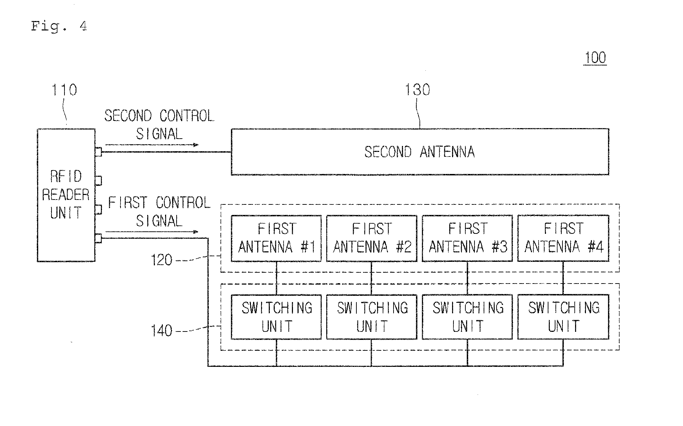

Therefore, the other embodiment may include a switching unit 140 as illustrated in Fig. 4.

The switching unit 140 may block the first control signal or driving power for operating first antenna number one to number four.

That is, when there is no approaching of the RFID tag for a certain period of time, the RFID reader unit 110 may transmit an on/off signal to the switching unit 140 so that only one or two first antennas among the plurality of antennas are operated.

Therefore, when there is no approaching of the RFID tag for the certain period of time, only a particular first antenna among the first antennas may be operated. Herein, it is preferable that the operated first antenna is located at a starting point of the approaching of the item (i.e., an entry part of the shelf).

Thereafter, when approaching of a certain RFID tag is detected, the RFID reader unit 110 may operate all of the first antennas.

The RFID tag approaching the shelf antenna system includes an active tag and a passive tag.

The active tag may have a power source therein, and may be operated by using the power source.

On the other hand, the passive tag receives magnetic energy from the reader unit so as to be operated by using the magnetic energy as power.

That is, a chip used in the passive tag is supplied with a carrier wave from the reader unit and generates driving power by using the carrier wave so as to communicate with the reader unit by using the generated driving power. The tag includes a capacitor and transmits the item information to the reader unit by means of charging and discharging operations of the capacitor.

When the active tag approaches the shelf antenna system, the electromagnetic waves generated by the first antenna 120 may be the wake-up signal for waking up the active tag.

However, when the passive tag approaches the shelf antenna system, the electromagnetic waves generated by the first antenna 120 may be a signal for charging the capacitor included in the passive tag.

According to a charge state of the capacitor, a response speed of the passive tag may be determined. When the capacitor is charged to a high degree, the response speed increases. When the capacitor is charged to a low degree, the response speed may decrease since a charging operation is performed by using a signal transmitted from the reader unit.

Therefore, the electromagnetic waves generated by the first antenna 120 may charge the capacitor included in the passive tag approaching the first antenna 120. Further, by increasing the response speed of the passive tag, the tag recognition rate may be improved.

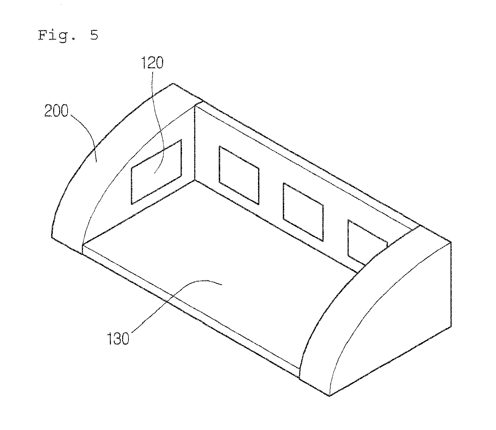

Fig. 5 is a diagram illustrating an example of application of the shelf antenna system according to an embodiment.

Referring to Fig. 5, the shelf antenna system may include a shelf case 200, the first antenna 120 installed on at least a first side of the shelf case 200, and the second antenna 130 installed on a second side of the shelf case 200.

The shelf case 200 may provide a space for entry of the RFID tag-attached item. The shelf case 200 provides an area for recognizing the RFID tag, and allows the RFID tag-attached item to approach the area.

Although the shelf case has first to fourth sides according to the embodiment, this shape of the shelf case is merely one example. Thus, the shelf case may include a plurality of sides more than four sides.

The first antenna 120 may be installed on at least one side of the shelf case.

The second antenna 130 may be installed on a particular second side of the shelf case. That is, the second antenna 130 may be installed on a bottom side of the shelf case 200 so as to easily obtain the RFID tag information from the item entering the shelf case.

The first antenna 120 may be installed in plurality on the left side, right side, and rear side of the shelf case 200 so as to surround and wake up the RFID tag entering the shelf case 200.

Further, only the first antenna, which is installed on a side corresponding to a direction in which RFID tags mostly come, may be operated during a certain period of time. The other first antennas installed on sides corresponding to other directions may also be operated later.

As described above, according to the embodiments, the tag recognition rate and speed are improved by adopting the showering function for a shelf antenna, and thus a more stable shelf antenna system can be provided.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. An antenna system comprising:
a first antenna comprising at least one antenna configured to operate in response to a first control signal;
a second antenna configured to operate in response to a second control signal and receive information from a radio frequency identification (RFID) tag; and
a reader unit configured to generate the first or second control signal and obtain the RFID tag information received through the second antenna.

2. The antenna system according to claim 1, further comprising, if the first antenna is provided in plurality, a switching unit for switching between operation states of the plurality of first antennas.

3. The antenna system according to claim 1, wherein the first control signal is a wake-up signal of the RFID tag, and the second control signal is for reading the RFID tag information.

4. The antenna system according to claim 1, wherein the RFID tag comprises at least one capacitor configured to perform charging and discharging operations for transmitting the RFID tag information.

5. The antenna system according to claim 4, wherein the first control signal is for charging a capacitor included in the RFID tag.

6. The antenna system according to claim 1, further comprising a shelf case, wherein the first antenna is installed on a first side of the shelf case and is operated at a first time point, and the second antenna is installed on a second side of the shelf case and is operated at a second time point.

7. The antenna system according to claim 6, wherein the first side comprises at least one of a rear side, a left side, and a right side of the shelf case, and the second side is a bottom side of the shelf case.

8. The antenna system according to claim 6, wherein the first time point is repeated at a particular interval of time, and the second time point is a point of time when the RFID tag approaches.

9. The antenna system according to claim 1 or 6, wherein the first antenna generates a signal for waking up an RFID tag or a signal for charging a capacitor included in the RFID tag.

10. A method for controlling an antenna system, the method comprising:
generating a first control signal via a first antenna at a first time point;
waking up an RFID tag according to the first control signal; and
obtaining information from the woken-up RFID tag via a second antenna at a second time point.

11. The method according to claim 10, wherein the first time point is repeated at a particular interval of time, and the second time point is a point of time when the RFID tag is woken up by the first control signal.

12. The method according to claim 10, wherein the first antenna is provided in plurality, and electromagnetic waves are generated via the plurality of first antennas according to a showering operation.

13. The method according to claim 12, wherein the plurality of first antennas are selectively operated according to an operation of the switching unit.
